# EUROPÄISCHE PATENTSCHRIFT

(11) **EP 1 262 610 B1**
(45) Veröffentlichungstag und Bekanntmachung des Hinweises auf die Patenterteilung: **13.12.2006**
(21) Anmeldenummer: 02011977.2
(22) Anmeldetag: 29.05.2002
(51) Int. Cl.: E04F 21/08, E04F 21/12, B65D 88/56, B65G 65/23

(54) **Vorrichtung zum Fördern vom Schüttgut- oder Fasermaterial**
Device for conveying bulk material or fibrous material
Dispositif de convoyage de matière en vrac ou fibreuse

(30) Priorität: 01.06.2001 DE 10126840
(43) Veröffentlichungstag der Anmeldung: 04.12.2002
(73) Patentinhaber: B-Bau Beat Bläsi, 9425 Thal (CH)
(72) Erfinder: Bläsi, Beat, 9425 Thal (CH)
(74) Vertreter: Epping - Hermann - Fischer

(56) Entgegenhaltungen:
- DE-A- 19 947 979
- DE-A- 19 961 335
- DE-B- 1 232 522
- DE-B- 2 259 881
- GB-A- 1 508 415

## Beschreibung

Die Erfindung bezieht sich auf eine Vorrichtung zum Fördern von schüttgut- oder Fasermaterial, insbesondere von Einblasdämmstoff, mit einem Vorratsbehältnis und einer Fördereinheit, gemäß dem Oberbegriff des Patentanspruches 1.

Eine deratige Vorrichtung ist beispielsweise aus der WO01/25566 A1 bekannt. Hierin ist eine Befüllvorrichtung für Schüttgut oder Fasermaterial beschrieben, bei der mit einer Austragsvorrichtung das Schüttgut oder Fasermaterial aus einem Vorratsbehältnis einer Fördereinheit zugeführt wird. Zur kontinuierlichen Bestimmung der eingeblasenen Dämmstoffmenge während des Einblasens ist die Austragsvorrichtung auf einer Wägeeinrichtung gelagert. Im Speziellen ist in der WO01/25566 ein LKW beschrieben, auf dessen Ladefläche sich die Austragsvorrichtungbeispielsweise ein Kratzboden oder ein Förderband - befindet, auf der wiederum der Schüttgut- bzw. Fasermaterialvorrat gelagert ist.

Solche Dämmstoff-Einblasanlagen werden vorzugsweise verwendet, um in Dämmstoffkammern von Gebäude-Wand-, Decken oder Dachelementen Faserdämmstoff-Material einzublasen.

Eine Kippvorrichtung für die Entleerung von Behältern, die mit Schüttgut, insbesondere Kunststoffgranulat, gefüllt sind, ist in der DE 199 61 335 A1 beschrieben.

Aus der DE 1 232 522 ist ein Entladeblock zum Kippen von Behältern mit einem besonders gearteten Kippmechanismus angegeben.

In der DE 2 259 881 ist eine Vorrichtung zur Versorgung von Verputzmaschinen mit trockenem Gips beschrieben, bei dem ein trichterartiger Silo und ein Gebläse auf einem Fahrgestell angeordnet sind.

Die GB 1 508 415 beschreibt eine Kippvorrichtung zum Entleeren von Schüttgut aus einem Container.

Die in diesen Druckschriften beschriebenen Vorrichtungen eigenen sich insbesondere nicht oder nur unter erheblichen technischen Schwierigkeiten für Fasermaterial, insbesondere Einblasdämmstoffe.

Die Aufgabe der vorliegenden Erfindung besteht darin, eine technisch verbesserte Vorrichtung der eingangs genannten Art zu entwickeln, die sich insbesondere zur Verwendung bei kleinen Anlagen eignet und eine technisch vereinfachte Art der Schüttgut- oder Dämmstoffaustragung aufweist.

Diese Aufgabe wird mit einer Vorrichtung mit den Merkmalen des Patentanspruches 1 gelöst.

Vorteilhafte Weiterbildungen der Vorrichtung sind in den Unteransprüchen 2 bis 15 enthalten.

Bei der Vorrichtung ist
- ein Vorratsbehältnis unmittelbar oder mittelbar an oder auf einer Wägeeinrichtung gelagert und
- für eine automatische Austragung für das Schüttgut oder das Fasermaterial aus dem Vorratsbehältnis eine Kippvorrichtung vorgesehen, die das Vorratsbehältnis über eine Auslassöffnung des Vorratsbehältnisses kippt.

Das Vorratsbehältnis, die Kippvorrichtung und die Fördereinheit sind bevorzugt auf einem gemeinsamen Anhänger oder Auflieger montiert.

Weiterhin bevorzugt ist an der Auslassöffnung des Vorratsbehältnisses eine erste Auflockerungseinrichtung, zum Beispiel eine erste Hacker- oder Häckslereinrichtung und/oder eine Rührereinrichtung, angeordnet, die das Schüttgut- oder Fasermaterial vor dessen Zuführung zur Fördereinheit auflockert. Um ein Abrutschen des Schüttgut- oder Fasermaterials zur Auslassöffnung des Vorratsbehältnisses hin sicherzustellen, ist entlang einer Seitenwand des Vorratsbehältnisses eine zweite Auflockerungseinrichtung, zum Beispiel wiederum eine Hacker- oder Häckslereinrichtung, vorgesehen. Dadurch wird eine Brückenbildung zwischen zwei gegenüberliegenden Wänden des Vorratsbehälters, die insbesondere bei für den Transport verpressten Fasermaterialien auftreten kann, unterbunden.

Der ersten Auflockerungseinheit ist vorzugsweise eine Zellradschleuse nachgeordnet, in die das gegebenenfalls aufgelockerte Material über die Auslassöffnung des Vorratsbehältnisses gelangt. Diese weist einen Gebläseanschluß auf, der an ein Gebläse gekoppelt ist, das in die Zellradschleuse bläst. Weiterhin weist die Zellradschleuse einen Transportleitungsanschluß auf, durch den das Material aus der Zellradschleuse ausgeblasen und beispielsweise durch eine Transportleitung zu einem Einblasschlauch befördert wird.

Während des Betriebes der Vorrichtung sind das Vorratsbehältnis einschließlich Kippvorrichtung und Fördereinheit vorzugsweise gemeinsam auf Stützbeinen gelagert, die die Wägeeinrichtung umfassen. Während des Betriebes der Vorrichtung kann somit die zur Fördereinheit geförderte Menge an Schüttgut- oder Fasermaterial jederzeit bestimmt werden. Dies erfolgt vorzugsweise per Funksteuerung.

Um einen kontinuierlichen Materialtransport zur Auslassöffnung zu erzielen, ist das Vorratsbehältnis derart ausgestaltet, dass eine lichte Innenbreite gesehen von einer Einfüllöffnung zur Fördereinheit hin größer wird. Insbesondere verlaufen zwei einander gegenüberliegende innere Seitenwände des Vorratsbehältnisses zur Fördereinheit hin zumindest über eine Teillänge konisch auseinander.

Zum Befüllen des Vorratsbehältnisses ist vorzugsweise an dessen Einfüllöffnung eine Hebeanlage zum Einfüllen von Schüttgut-oder Fasermaterial, insbesondere eine Hebebühne angeordnet.

Um ein einfaches Auswechseln der Fördereinheit zu ermöglichen, ist diese als separates Modul ausgebildet, das am Vorratsbehälter (3) lösbar befestigt ist. Dieses Modul ist beispielsweise eine Faserdämmstoff-Einblasmaschinc, die insbesondere eine Steuerungseinrichtung, ein Gebläse, eine Zellradschleuse, und eine Auflockerungseinrichtung aufweist.

Zur Unterstützung eines gleichmäßigen Transports des Schüttgut-oder Fasermaterials zur Auslaßöffnung hin weist die Vorrichtung an mindestens einer der Innenwände des Vorratsbehältnisses eine Abgleitvorrichtung, insbesondere in Form einer Rollenbahn auf.

Weiterhin weist die Vorrichtung vorteilhafterweise eine fernsteuerbare Steuer- und Regeleinrichtung für die Rührer- und Hackereinrichtung und die Fördereinheit auf. Diese kann vermittels einer Fern-Signalübertragungseinrichtung von einer entfernt von der Vorrichtung arbeitenden Bedienperson ferngesteuert werden.

Weiterhin weist die Vorrichtung vorzugsweise eine tragbare Anzeigeeinrichtung für Wägedaten der Wägeeinrichtung auf, die mit der Wägeeinrichtung über eine Fern-Signalübertragungseinrichtung verbunden ist, so dass die Wägedaten und damit die bereits verarbeitete Materialmenge während des Betriebes von einer entfernt von der Vorrichtung arbeitenden Bedienperson jederzeit ablesbar sind.

Die Vorrichtung eignet sich besonders bevorzugt zur Zuführung von Dämmstoff, insbesondere von Zelluloseflocken oder Holzfasern, zu einem Dämmstoffgebläse für Faserdämmstoffe.

Die Wägeeinrichtung dient zum Abrechnen einzelner Dämmstoff-Felder, Wandelemente, Wände etc. Um eine Vorort-Kontrolle und ggf. -Zertifizierung zu ermöglichen ist die Wägeeinrichtung mit einem Drucker ausgestattet.

Die Erfindung wird im Folgenden anhand eines Ausführungsbeispieles in Verbindung mit zwei Figuren beschrieben.

Es zeigen:
Figur 1, eine schematische Darstellung des Ausführungsbeispieles im Betriebszustand der Fördereinheit und
Figur 2, eine schematische Darstellung des Ausführungsbeispieles während des Beladens des Voratsbehälters.

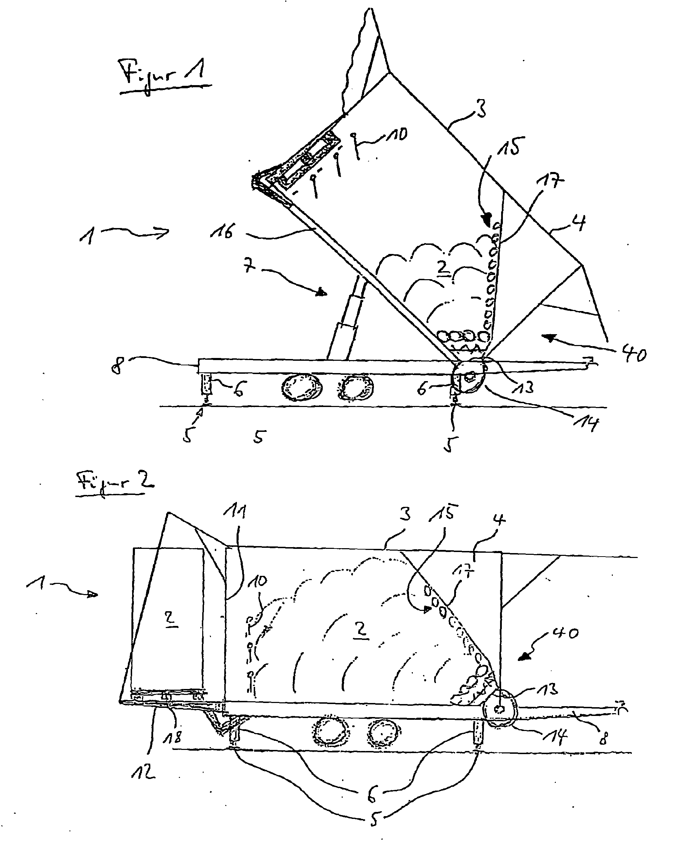

Bei dem Ausführungsbeispiel der Vorrichtung 1 gemäß den Figuren 1 und 2 befindet sich auf der Ladefläche 16 eines Anhängers 8 einen Vorratcontainer 3 für Faserdämmstoffmaterial 2. Der Anhänger 8 ist im Betrieb der Vorrichtung 1 auf Hydraulikstützen 5 gelagert, von denen jede eine Wägezelle 6 aufweist, so dass die gesamte Vorrichtung auf einer Waage gelagert ist.

Zur automatischen Austragung für das Fasermaterial 2 aus dem Vorratcontainer 3 ist eine Kippvorrichtung 7 vorgesehen, die den Vorratcontainer 3 über dessen Auslassöffnung 13 dreht. Dies ist in Figur 1 dargestellt. Dadurch wird ein Abrutschen des Fasermaterials 2 zur Auslassöffnung 13 hin bewirkt.

Zur Unterstützung des Abrutschens des Fasermaterials 2 und zur Unterbindung einer Brückenbildung zwischen zwei konisch zusammenlaufenden Wänden des Vorratsbehältnisses 3 ist an mindestens einer dieser zur Auslassöffnung 13 hin laufenden Seitenwände 17 des Vorratcontainers 3 eine Hacker- oder Häckslereinrichtung 15 angeordnet.

Gesehen vom Fasermaterialvorrat 2 ist vor der Auslassöffnung 13 eine Häcksler- und/oder Rührereinrichtung 9 angeordnet, die das Fasermaterial 2 vor dessen Zuführung zu einer der Auslassöffnung 13 nachgeordneten Zellradschleuse 14 auflockert. Der Häcksler- und/oder Rührereinrichtung 9 ist eine Zellradschleuse 14 nachgeordnet, die an der Auslassöffnung 13 positioniert ist. Die Zellradschleuse 14 weist einen Gebläseanschluß (nicht gezeigt) auf, der an ein in einer Steuerungs- und Gebläseeinheit 4 befindliches Gebläse (nicht gezeigt) gekoppelt ist, das in die Zellradschleuse 14 bläst. Weiterhin weist die Zellradschleuse 14 einen Transportleitungsanschluß (nicht gezeigt) auf, durch den das Material aus der Zellradschleuse 14 ausgeblasen und beispielsweise durch eine Transportleitung zu einem Einblasschlauch befördert wird.

Der Vorratcontainer 3 ist derart ausgestaltet, dass dessen innere Breite gesehen von einer Einfüllöffnung 11 zur Auslassöffnung 13 hin zunimmt; die betreffenden Seitenwände laufen insbesondere konisch auseinander. Die innere Höhe des Vorratcontainers 3 wird dagegen gesehen von der Einfüllöffnung 11 zur Auslassöffnung 13 hin kleiner; die betreffenden Seitenwände laufen insbesondere konisch zusammen.

An der Einfüllöffnung 11 des Vorratcontainers 3 ist eine Hebebühne 12 oder ein Ballettenlift zum Befüllen des Vorratcontainers mit Fasermaterial 2 angeordnet. Die Hebebühne 12 weist eine Halterung für Paletten auf, um zu verhindern, dass auf Paletten 18 angeliefertes Material 2 beim Einkippen in den Vorratcontainer 3 gelangt. Innerhalb der Einfüllöffnung 11 weist der Vorratcontainer 3 Material-Rückhalteklappen 10 auf.

Das Dämmstoffgebläse, die Zellradschleuse 14, eine elektrische Steuerung und eine Waagenelektronik sind beispielsweise in einem separaten Modul integriert, das an den Vorratcontainer 3 lösbar montiert ist. Das Modul in Form einer separaten Fördereinheit 40 ist mittels Haltklammern lösbar am Vorratcontainer 3 befestigt.

Die Vorrichtung 1 gemäß dem Ausführungsbeispiel weist weiterhin eine Steuer- und Regeleinrichtung für die Häcksler- und/oder Rührereinrichtung 9 und die Fördereinheit 40 auf, die vermittels einer Signalübertragungseinrichtung, zum Beispiel Funkübertragung, von einer entfernt von der Vorrichtung arbeitenden Bedienperson, die einen Einblasschlauch führt, fernsteuerbar ist.

Weiterhin weist die Vorrichtung gemäß dem Ausführungsbeispiel eine entfernt von der Vorrichtung positionierbare Anzeigeeinrichtung für Wägedaten auf, so dass die Wägedaten und damit die bereits verarbeitete Materialmenge während des Betriebes von der entfernt von der Vorrichtung arbeitenden Bedienperson jederzeit ablesbar sind. Die Anzeigeeinrichtung ist beispielsweise ebenfalls über eine Funkverbindung mit der Wägeeinrichtung verbunden.

Besonders bevorzugt eignet sich die Vorrichtung zur Verarbeitung von Faserdämmstoffen, insbesondere von Zelluloseflocken oder Holzfasern.

An die Fördereinheit 40 ist eine Materialtransportleitung, hier im Speziellen eine Einblasleitung angeschlossen, durch die das zu verarbeitende Material, getrieben von der Fördereinheit 40, vom Anhänger zum Verarbeitungsort geleitet wird.

Der Vorratcontainer 3, die Kippvorrichtung 7 und die Fördereinheit 40 können alternativ zur Montage auf einem Anhänger 8 selbstverständlich auch auf einem Auflieger oder einer Ladefläche eines anderen geeigneten Transportmittels montiert sein. Ebenso kann die Vorrichtung auch als stationäre Einblasanlage ausgestaltet sein, ohne dass sie dabei den in den Ansprüchen angegebenen Gedanken der Erfindung verläßt.

## Patentansprüche

1. Vorrichtung (1) zum Fördern von Schüttgut- oder Faserinaterial (2), mit einem Vorratsbehältnis (3) und einer Fördereinheit (40), bei der
- das Vorratsbehältnis (3) mittelbar oder unmittelbar an oder auf einer Wägeeinrichtung (6) gelagert ist,
- für eine automatische Austragung des Schüttgut- oder Fasermaterials (2) aus dem Vorratsbehältnis (3) zu der Fördereinheit (40) eine Kippvorrichtung (7) vorgesehen ist, die das Vorratsbehältnis (3) über eine Auslassöffnung (13) des Vorratsbehältnisses (3) dreht,und
- der Auslassöffnung (13) die Fördereinheit (40) nachgeordnet ist,
**dadurch gekennzeichnet, dass**
eine lichte Innenbreite des Vorratsbehältnisses (3) gesehen von einer Einfüllöffnung (11) zur Fördereinheit (40) hin größer wird.

2. Vorrichtung nach Anspruch 1,
**dadurch gekennzeichnet, dass**
das Vorratsbehältnis (3), die Kippvorrichtung (7) und die Fördereinheit (40) auf einem gemeinsamen Anhänger (8) oder Auflieger montiert sind.

3. Vorrichtung nach Anspruch 2,
**dadurch gekennzeichnet, dass** an der Auslassöffnung (13) des Vorratsbehältnisses (3) eine Auflockerungseinrichtung (9) angeordnet ist, die das Schüttgut- oder Fasermaterial (2) vor dessen Zuführung zur Fördereinheit (40) auflockert.

4. Vorrichtung nach Anspruch 3,
**dadurch gekennzeichnet, dass**
der Auflockerungseinrichtung (9) eine Zellradschleuse (14) nachgeordnet ist.

5. Vorrichtung nach mindestens einem der vorangehendenPatentansprüche,
**dadurch gekennzeichnet, dass**
während deren Betrieb das Vorratsbehältnis (3) einschließlich Kippvorrichtung (7) und Fördereinheit (40) gemeinsam auf Stützbeinen (5) gelagert sind, die die Wägeeinrichtung (6) aufweisen, so dass während des Betriebes der Vorrichtung die zur Fördereinheit (40) geförderte Menge an Schüttgut- oder Fasermaterial (2) fortwährend bestimmbar ist.

6. Vorrichtung nach mindestens einem der vorangehenden Patentansprüche, **dadurch gekennzeichnet, dass**
zwei einander gegenüberliegende innere Seitenwände des Vorratsbehältnisses (3) zur Fördereinheit (40) hin zumindest über eine Teillänge vorzugsweise konisch auseinanderlaufen.

7. Vorrichtung nach mindesten einem der vorangehenden Patentansprüche,
**dadurch gekennzeichnet, dass**
an der Einfüllöffnung (11) des Vorratsbehältnisses (3) eine Hebeanlage (12) zum Einfüllen von Schüttgut- oder Fasermaterial (2), insbesondere eine Hebebühne angeordnet ist.

8. Vorrichtung nach mindestens einem der vorangehenden Patentansprüche,
**dadurch gekennzeichnet, dass**
im Vorratsbehältnis (3) Material-Rückhalteklappen (10) vorgesehen sind.

9. Vorrichtung nach mindestens einem der vorangehenden Patentansprüche,
**dadurch gekennzeichnet, dass**
die Fördereinheit (40) am Vorratsbehälter (3) angeordnet ist.

10. Vorrichtung nach mindestens einem der vorangehenden Patentansprüche,
**dadurch gekennzeichnet, dass**
die Fördereinheit (40) eine Einblasmaschine ist, die insbesondere eine Steuerungseinrichtung, ein Gebläse und eine Zellradschleuse aufweist.

11. Vorrichtung nach Anspruch 11,
**dadurch gekennzeichnet, dass**
die Einblasmaschine als separates Modul ausgebildet ist, das lösbar am Vorratsbehälter (3) befestigt ist und vorzugsweise auch die Auflockerungseinrichtung (9) aufweist.

12. Vorrichtung nach Patentanspruch 3 oder 4 oder nach einem
der Patentansprüche 5 bis 11 unter Rückbezug auf Patentanspruch 3,
**dadurch gekennzeichnet, dass**
an mindestens einer der Innenwände des Vorratsbehältnisses (3) eine weitere Auflockerungseinrichtung (15) angeordnet ist, die einen gleichmäßigen Transport des Schüttgut- oder Fasermaterials zur Auslaßöffnung (13) hin unterstützt.

13. Vorrichtung nach Patentanspruch 3, 4 oder 12 oder nach
einem der Patentansprüche 5 bis 11 unter Rückbezug auf Patentanspruch 3,
**dadurch gekennzeichnet, dass**
eine Steuer- und Regeleinrichtung für die Auflockerungseinrichtung (9) und die Fördereinheit (40) vorgesehen ist, die vermittels einer Signalübertragungseinrichtung von einer entfernt von der Vorrichtung arbeitenden Bedienperson fernsteuerbar ist.

14. Vorrichtung nach mindestens einem der vorangehenden Patentansprüche,
**dadurch gekennzeichnet, dass**
eine entfernt von der Vorrichtung positionierbare Anzeigeeinrichtung für Wägedaten der Wägeeinrichtung (6) vorgesehen ist, so dass die Wägedaten und damit die bereits verarbeitete Materialmenge während des Betriebes von einer entfernt von der Vorrichtung arbeitende Bedienperson ablesbar sind.

15. Vorrichtung nach mindestens einem der vorangehenden Patentansprüche,
**dadurch gekennzeichnet, dass**
die Fördereinheit (40) ein Dämmstoffgebläse für Faserdämmstoff, insbesondere für Zelluloseflocken oder Holzfasern, aufweist.

## Claims

1. Device (1) for conveying bulk material or fibrous material (2), with a storage container (3) and a conveying unit (40), in which
- the storage container (3) is mounted indirectly or directly at or on a weighing arrangement (6),
- a tipping device (7), which rotates the storage container (3) over an outlet opening (13) of the storage container (3), is provided for automatic discharge of the bulk material or fibrous material (2) from the storage container (3) to the conveying unit (40), and
- the conveying unit (40) is arranged downstream of the outlet opening (13),
**characterized in that**, seen from a filling opening (11), a clear internal width of the storage container (3) increases towards the conveying unit (40).

2. Device according to Claim 1, **characterized in that** the storage container (3), the tipping device (7) and the conveying unit (40) are mounted on a common trailer (8) or semitrailer.

3. Device according to Claim 2, **characterized in that** a loosening arrangement (9), which loosens the bulk material or fibrous material (2) before it is fed to the conveying unit (40), is arranged at the outlet opening (13) of the storage container (3).

4. Device according to Claim 3, **characterized in that** a cellular wheel sluice (14) is arranged downstream of the loosening arrangement (9).

5. Device according to at least one of the preceding patent claims, **characterized in that**, during its operation, the storage container (3) including tipping device (7) and conveying unit (40) are mounted together on support legs (5) which comprise the weighing arrangement (6), so that the quantity of bulk material or fibrous material conveyed to the conveying unit (40) can be determined continuously during operation of the device.

6. Device according to at least one of the preceding patent claims, **characterized in that** two inner side walls of the storage container (3) lying opposite one another diverge preferably conically at least over a part length towards the conveying unit (40).

7. Device according to at least one of the preceding patent claims, **characterized in that** a lifting installation (12) for filling bulk material or fibrous material (2), in particular a lifting platform, is arranged at the filling opening (11) of the storage container (3).

8. Device according to at least one of the preceding patent claims, **characterized in that** material-retaining flaps (10) are provided in the storage container (3).

9. Device according to at least one of the preceding patent claims, **characterized in that** the conveying unit (40) is arranged on the storage container (3).

10. Device according to at least one of the preceding patent claims, **characterized in that** the conveying unit (40) is a blowing-in machine which comprises in particular a control arrangement, a blower and a cellular wheel sluice.

11. Device according to Claim 11, **characterized in that** the blowing-in machine is designed as a separate module which is fastened detachably to the storage container (3) and preferably also comprises the loosening arrangement (9).

12. Device according to Patent Claim 3 or 4 or according to one of Patent Claims 5 to 11 with reference back to Patent Claim 3, **characterized in that** a further loosening arrangement (15), which supports uniform transport of the bulk material or fibrous material (2) towards the outlet opening (13), is arranged on at least one of the inner walls of the storage container (3).

13. Device according to Patent Claim 3, 4 or 12 or according to one of Patent Claims 5 to 11 with reference back to Patent Claim 3, **characterized in that** a control and regulating arrangement for the loosening arrangement (9) and the conveying unit (40) is provided, which can be controlled remotely by an operator working at a distance from the device by means of a signal transmission arrangement.

14. Device according to at least one of the preceding patent claims, **characterized in that** a display arrangement for weighing data of the weighing arrangement (6), which can be positioned at a distance from the device, is provided, so that the weighing data and thus the material quantity already processed can be read off during operation by an operator working at a distance from the device.

15. Device according to at least one of the preceding patent claims, **characterized in that** the conveying unit (40) comprises an insulating-material blower for fibrous insulating material, in particular for cellulose flakes or wood fibres.

## Revendications

1. Dispositif (1) de convoyage de matière en vrac ou fibreuse (2), comprenant un réservoir (3) et une unité de convoyage (40), dans lequel :
- le réservoir (3) est monté de manière directe ou indirecte contre ou sur un dispositif de pesée (6),
- pour une décharge automatique de la matière en vrac ou fibreuse (2) du réservoir (3) à l'unité de convoyage (40), on prévoit un dispositif de basculement (7) qui fait tourner le réservoir (3) au-dessus d'une ouverture de sortie (13) du réservoir (3), et
- l'ouverture de sortie (13) est suivie de l'unité de convoyage (40),
**caractérisé en ce**
**qu'**une largeur intérieure libre du réservoir (3) augmente depuis une ouverture de remplissage (11) vers l'unité de convoyage (40).

2. Dispositif selon la revendication 1,
**caractérisé en ce que**
le réservoir (3), le dispositif de basculement (7) et l'unité de convoyage (40) sont montés sur une remorque commune (8) ou un semi-remorque.

3. Dispositif selon la revendication 2,
**caractérisé en ce qu'**un dispositif de décompactage (9) est disposé sur l'ouverture de sortie (13) du réservoir (3), lequel décompacte la matière en vrac ou fibreuse (2) avant son acheminement à l'unité de convoyage (40).

4. Dispositif selon la revendication 3,
**caractérisé en ce que**
le dispositif de décompactage (9) est suivi d'une écluse à roue cellulaire (14).

5. Dispositif selon au moins l'une quelconque des revendications précédentes,
**caractérisé en ce que**
pendant leur fonctionnement, le réservoir (3), y compris le dispositif de basculement (7) et l'unité de convoyage (40) sont montés ensemble sur des pieds de support (5) qui présentent le dispositif de pesée (6), de sorte que pendant le fonctionnement du dispositif, la quantité de matière en vrac ou fibreuse (2) acheminée à l'unité de convoyage (40) peut être déterminée en continu.

6. Dispositif selon au moins l'une quelconque des revendications précédentes, **caractérisé en ce que** deux parois latérales internes opposées du réservoir (3) divergent l'une de l'autre de préférence coniquement vers l'unité de convoyage (40) au moins sur une longueur partielle.

7. Dispositif selon au moins l'une quelconque des revendications précédentes,
**caractérisé en ce que**
l'on prévoit au niveau de l'ouverture de remplissage (11) du réservoir (3) une installation de levage (12) pour le remplissage de matière en vrac ou fibreuse (2), notamment une plate-forme de levage.

8. Dispositif selon au moins l'une quelconque des revendications précédentes,
**caractérisé en ce que**
l'on prévoit dans le réservoir (3) des volets de retenue de matière (10).

9. Dispositif selon au moins l'une quelconque des revendications précédentes,
**caractérisé en ce que**
l'unité de convoyage (40) est disposée sur le réservoir (3).

10. Dispositif selon au moins l'une quelconque des revendications précédentes,
**caractérisé en ce que**
l'unité de convoyage (40) est une machine de soufflage qui présente en particulier un dispositif de commande, une soufflante et une écluse à roue cellulaire.

11. Dispositif selon la revendication 11,
**caractérisé en ce que**
la machine de soufflage est réalisée sous forme de module séparé qui est fixé de manière détachable sur le réservoir (3) et qui présente de préférence également le dispositif de décompactage (9).

12. Dispositif selon la revendication 3 ou 4, ou selon l'une quelconque des revendications 5 à 11 lorsqu'elles se rapportent à la revendication 3,
**caractérisé en ce que**
l'on prévoit sur au moins l'une des parois internes du réservoir (3) un autre dispositif de décompactage (15) qui favorise un transport uniforme de la matière en vrac ou fibreuse vers l'ouverture de sortie (13).

13. Dispositif selon l'une quelconque des revendications 3, 4 ou 12, ou selon l'une quelconque des revendications 5 à 11 lorsqu'elles se rapportent à la revendication 3,
**caractérisé en ce que**
l'on prévoit un dispositif de commande et de régulation pour le dispositif de décompactage (9) et l'unité de convoyage (40), qui peut être commandé à distance par un opérateur travaillant à distance du dispositif au moyen d'un dispositif de transfert de signaux.

14. Dispositif selon au moins l'une quelconque des revendications précédentes,
**caractérisé en ce que**
l'on prévoit un dispositif d'affichage pouvant être positionné à distance du dispositif, pour des données de pesée du dispositif de pesée (6), de sorte que les données de pesée et donc la quantité de matière déjà traitée puissent être lues pendant le fonctionnement par un opérateur travaillant à distance du dispositif.

15. Dispositif selon au moins l'une quelconque des revendications précédentes,
**caractérisé en ce que**
l'unité de convoyage (40) présente une soufflante de produit d'isolation pour des fibres d'isolation, notamment pour des flocons de cellulose ou des fibres de bois.
